# EUROPEAN PATENT SPECIFICATION

(11) **EP 0 739 523 B1**
(45) Date of publication and mention of the grant of the patent: **27.05.1998**
(21) Application number: 95908450.0
(22) Date of filing: 06.01.1995
(51) Int. Cl.: G06K 19/077, G06K 7/10

(54) **IC COMMUNICATION CARD**
IC-KOMMUNIKATIONSKARTE
CARTE DE COMMUNICATION A CIRCUIT INTEGRE

(30) Priority: 11.01.1994 JP 12247/94
(43) Date of publication of application: 30.10.1996
(73) Proprietor: ITT MANUFACTURING ENTERPRISES, INC., Wilmington, Delaware 19801 (US)
(72) Inventor: NAKATA, Eiichi, Tokyo (JP); HIRAYAMA, Masahiro, Edogawa-ku, Tokyo (JP)
(74) Representative: Esser, Wolfgang
(86) International application number: US9500215
(87) International publication number: WO9519015

(56) References cited:
- EP-A- 0 302 453
- EP-A- 0 564 051
- DE-A- 4 028 966
- DE-U- 9 303 877

## Description

### BACKGROUND OF THE INVENTION:

Portable electronic devices such as notebook computers are increasingly being provided with a slot for receiving an IC card constructed in accordance with JEIDA and PC CARD standards. Under such standards, each IC card has a card length of about 86mm, a card width of about 54mm, and a card thickness of about 5mm. A variety of IC cards are available, including those with considerable memory so that data can be stored in a card and the data transferred to or from the electronic device and the card. The portable electronic devices may have other input/output ports.

It is often necessary to transfer data between the portable electronic device and a second device such a printer, desk top computer, etc. One technique for such transfer is to provide an IC card with a connector at its rear end, and a cable with one end that plugs into the card and another end that plugs into the second electronic device. Cables can be clumsy and inconvenient, and are not preferred for many of the same reasons that they are not generally used to connect a remote television control to a television set. Cables can be eliminated by connecting infrared emitter/detector units through short cables to each of the two electronic devices. However, in the case of the first electronic device, which may be a small portable computer, it can be annoying to have to store such a unit with its cable and to separately support the first electronic device and the unit.

*From DE-A-4028966 an IC-Memory module or IC-Card is known for connection with* a *PC or other data handling system. It is described in general, that at the rear end of the card, interface terminals could be provided by electrical contacts or magnetic coupling, or by optical or acoustic transmission elements or by physical openings receiving measuring indicators for cooperation with integrated sensors.*

The features in the preamble of claim 1 are known from DE-A-4 028 966. EP-A-0 564 051 discloses an identification card comprising a plastic frame. EP-A-0 302 453 discloses a card having a plurality of LEDs at a central portion of the card and optical fibres for guiding the emitted light to the rear portion of the card so that the user can see the operating conditions of the card. It is also suggested to place the LEDs at the outside (rear) portion of the card.

An infrared communication system for connecting electronic devices, where one of the devices has a slot for receiving an IC card, which minimized efforts in storage and set up for *a stable and reliable* infrared data communications, would be of value.

### SUMMARY OF THE INVENTION

In accordance with one embodiment of the present invention, applicant provides a light communication capability for an electronic device that is designed to receive IC cards, which requires very little extra storage and which can be set up very easily. *Applicant provides an IC card with a front portion with a card connector for insertion into a card-receiving slot of the electronic device and which carries a light emitter and a light detector. A rigid frame extending between said front and rear portions of said card maintains said light emitter and a light detector in position and orientation. Said light emitter indudes a plurality of separate emitter elements spaced along the width of said rear portion of said card, which are electrically connected to be energized in synchronism.* The light emitter and detector are each mounted substantially at the rear edge of the IC card and are oriented to emit light in primarily a rearward direction away from the card and to detect light passing in a primarily forward direction towards the rear of the card. The rear portion of the card preferably has about the same width and height as the front portion, which facilitates storage of the card. Considerable light transmitting capability is obtained in the small card thickness by providing a plurality of light emitter elements that are spaced along the width of the card at substantially its rear edge.

The novel features of the invention are set forth with particularity in the appended claims. The invention will be best understood from the following description when read in conjunction with the accompanying drawings.

### BRIEF DESCRIPTION OF THE DRAWINGS

Fig. 1 is a partial isometric view of an IC card and electronic device

Fig. 2 is a plan view of the IC card of Fig. 1, with the cover removed, and with some parts shown schematically.

Fig. 3 is a partial sectional side view of the electronic device of Fig. 1 and of an IC card.

Fig. 4 is a partial isometric view of an other IC card.

Fig. 5 is an isometric view of a card and separate unit which can be used in the device of Fig. 1.

Fig. 6 is an exploded view of an IC card of the prior art and of a cable connector assembly mateable therewith.

Fig. 7 is a partial isometric view of an IC card and first electronic device, shown in communication with a second electronic device.

Fig. 8 is an isometric view of the IC card of Fig. 7, with the top cover removed.

Fig. 9 is an enlarged view of a portion of the IC card of Fig. 8.

Fig. 10 is a block diagram of circuitry of the IC card of Fig. 8.

Fig.11 is a schematic diagram of emitter and detector driving circuitry of the IC card of Fig. 8.

Fig.12 is a partial isometric view of two IC cards and two electronic devices, each similar to those of Fig. 7, showing them in communication with each other.

### DESCRIPTION OF THE DRAWINGS AND PREFFERED EMBODIMENTS

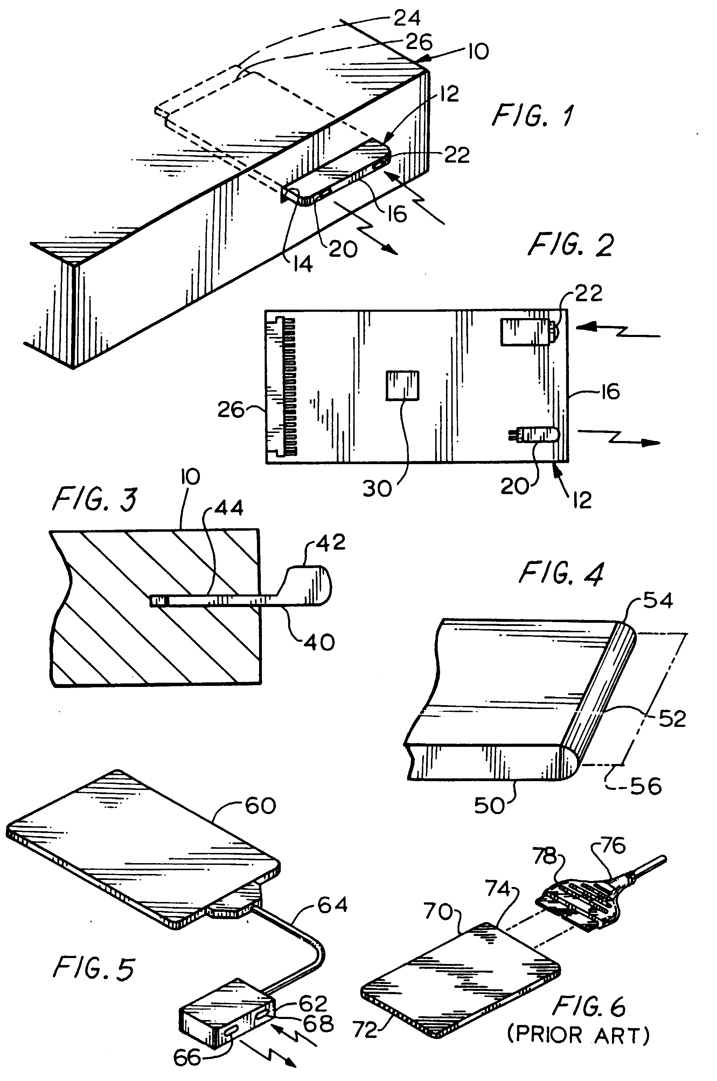

*Fig. 1 to 6 do not show embodiments of the invention.*

Fig. 1 illustrates an electronic device 10 and an IC card 12 lying in a slot 14 of the electronic device. The IC card has a rear edge 16, projecting from the electronic device. An infrared emitter 20 and an infrared detector 22 lie substantially at the rear edge of the card and transmit and receive data. In most cases, the data to be transmitted is stored and/or generated in the electronic device 10. The data is passed through a device connector 24 at the forward or innermost end of the slot 14 to a card connector 26 at the front end of the card. That data is used to modulate the light output of the infrared emitter 20. Similarly, in most cases the data represented by modulation of the infrared light detected by detector 22 is converted into electrical signals which are transmitted between the connectors 24, 26 to circuitry within the electronic device 10. There can be cases where the transmitted and/or received data is stored in a memory chip within the IC card itself.

Fig. 2 shows the IC card 12 with the card connector 26 at its front end, with the emitter and detector 20, 22 lying at the rear edge portion 16. A control circuit 30 controls the flow of signals representing data between terminals of the card connector 26 and the emitter and detector 20, 22.

Fig. 3 illustrates an IC card 40 which is similar to that of Figs. 1 and 2, except that the card 40 has a rear portion 42 which is of a thickness much greater than that of the forward card portion 44 that fits into a slot of the electronic device 10. The enlarged rear portion can be helpful to accommodate larger emitters and detectors.

Fig. 4 shows a portion of another IC card 50, wherein the rear edge portion 52 includes a cylindrical lens 54. The cylindrical lens 54, which is about half of a cylinder, collects light lying above or below the horizontal plane 56 of the card to provide more light for the detector, and also directs light emerging from the emitter so it extends more horizontally.

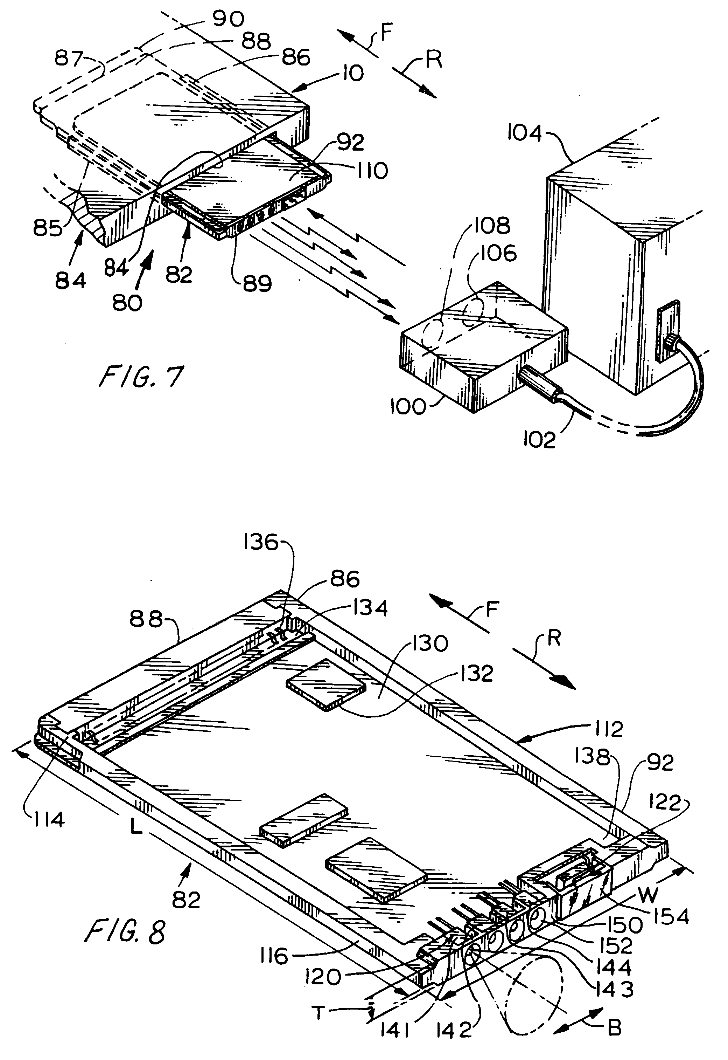

Fig. 5 shows a combination of an IC card 60, an infrared transmit/receive unit 62, and a cable 64. This arrangement provides an IC card 60 which can be stored in storage compartments designed to receive "standard" IC cards. However, the unit 62 and cable 64 require a separate storage area. A case for holding a personal computer or other electronic device and several standard IC cards, would have to be build with a custom storage area for the unit 62 and cable 64. Also, when the combination of Fig. 5 is to be used, the unit 62 with its infrared emitter 66 and infrared detector 68 must be placed on a surface, and a weight or other holddown may be required to position the unit 62 despite any sideward urging by the bent cable 64. However, the combination of Fig. 5 has the advantage that the mechanical construction of the card 60 is similar to that of prior IC cards, which have connectors at their front and rear ends. Fig. 6 shows such prior card 70 which has multi-contact connectors 72, 74 at its front and rear ends. A cable assembly 76 includes a plug 78 that can be plugged and unplugged from the rear connector 74 of such card.

Fig. 7 illustrates a combination 80 of an IC card 82 and an electronic device 84 such a notebook computer. As indicated in Fig. 8, the card 82 meets JEIDA and PC CARD standards, which require that the card have a card length L of about 86mm, a card width W of about 54mm, and a card thickness T of about 5mm. Fig. 7 shows the card 82 inserted into a slot 84 of the electronic device and held in position by slot guides 85. It may be noted that the front of the card has a front edge 87 of about 3.5mm thickness, while the rear of the card has a rear edge 89 of about 5mm thickness. These thicknesses are of about the same magnitude because the smaller one (3.5mm) is more than 50% of the larger one. A front portion 86 of the card has a front card connector 88 that mates with an electronic device connector 90 that lies at the inner end of the slot. A rear portion 92 of the card projects from the slot. The rear portion has an emitter and detector which emit and detect infrared light, for communication with a unit 100 that is connected through a cable 102 to a second electronic device 104 such as a printer. The unit 100 and cable 102 are stored with the second device 104, which is usually not portable, so the bulk of the unit 100 is usually not a significant disadvantage. The unit 100 has a considerable thickness to accommodate a relatively large emitter 106 and detector 108.

Fig. 8 illustrates the IC card 82, wherein a top cover 110 (Fig. 7) has been removed. The card includes a rigid frame 112 with a frame front 114 on which the front card connector 88 is mounted, and with a frame rear 116. A light emitter 120 and light detector 122 are mounted (indirectly) on the frame, so that the emitter and detector are fixed in position and orientation with respect to the rigid frame 112.

The card 82 includes a circuit board 130 with electronic components 132 mounted thereon. The circuit board has a front end 134 with traces (not shown) to which tails 136 of contacts of the front card connector 88 are soldered. The circuit board also has a rear end 138 with traces to which the emitter 120 and detector 122 are connected.

The emitter 120 is formed by four emitter elements 141-144. The frame has a rear barrier 150 at its rear edge, with the rear barrier lying immediately rearward of the emitter elements. The rear barrier has a plurality of holes 152 aligned with the emitter elements to pass light in a generally rearward direction from the emitter elements. An infrared window 154 is placed immediately rearward of the infrared detector 122 to pass only infrared light, and thereby block visible light and other frequencies that will tend to overload the detector 122. The detector 122 is oriented to detect light moving in a forward direction F towards the rear of the card.

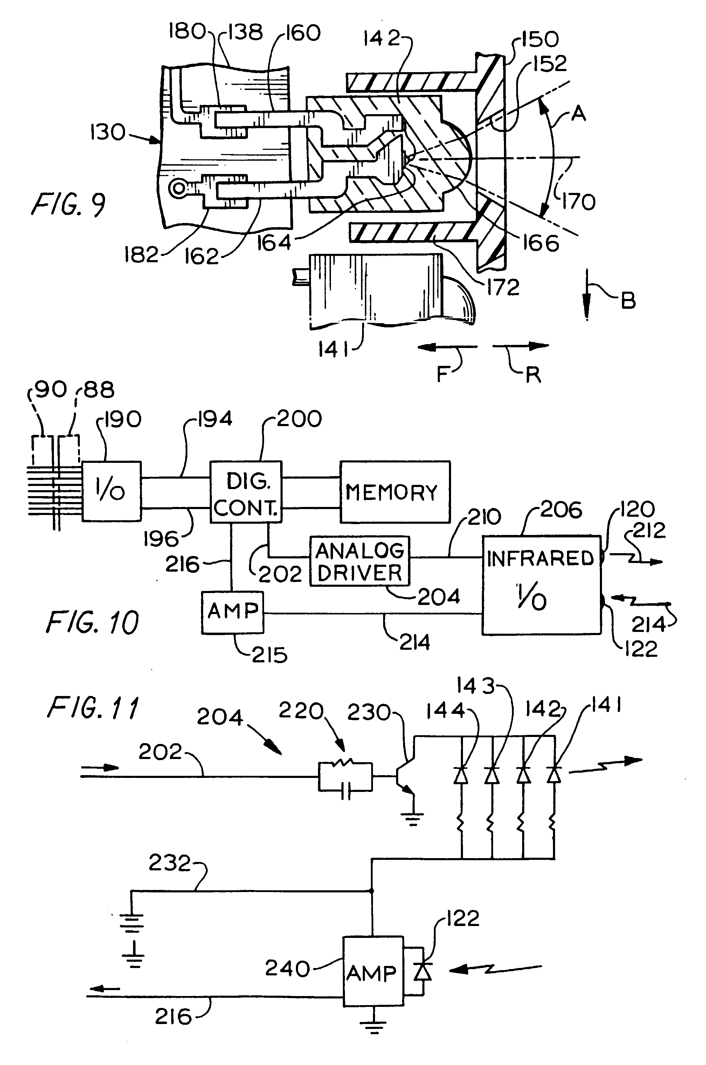

Fig. 9 illustrates one emitter element 142 and a portion of an adjacent emitter element 141. The emitter element such as 142, is an off-the-shelf item that includes a pair of terminals 160, 162 and a light emitting chip 164, all embedded in transparent plastic that includes a concentrating lens 166. The holes or openings 152 in the rear barrier 150 are of largely conical shape, and limit the emission of light so it is within a conical beam having a spread angle A of about 40 degrees (20° to 80°) around a forward-to-rearward axis 170 (about 20° above and 20° below). The rear barrier 150 also includes an opaque separator 172 on laterally (direction B) opposite sides of each light emitting element, to block any light from passing through an opening lying in front of a different element. Such separators block light from reaching other detectors of other devices in the vicinity, and generating noise in them.

Each emitter element is mounted and electrically connected by soldering its leads 160. 162 to corresponding pads 180, 182 at the rear end 138 of the circuit board 130. The barriers 172 only generally position the emitter elements. If an emitter element should be mounted in large misalignment with the axis 170 of a corresponding opening 152, then some light from that element will be blocked, and will not interfere with detectors of other electronic devices in the immediate environment. The fact that there are a plurality of different emitter elements, results in high assurance that there will be light transmitted throughout the intended conical beam of angle A. This allows communication with a known degree of misalignment between the emitter and detector elements of the two electronic devices. The provision of a plurality of emitter elements that are laterally spaced in direction B (parallel to the width W of the card) enables the rear portion of the card to have about the same thickness as the front portion, while still enabling considerable light energy to be transmitted. Such small thickness at the rear end enables the card to be easily stored in storage equipment intended for storage of other IC cards of the "standard" JEIDA and PC CARD shape and size. It is desirable that the width W and length L each be within 15% of JEIDA and PC CARD standards (86mm and 54mm, respectively) and that the thickness T be within 50% of JEIDA and PC CARD standards, to enable the card to be stored in space intended for storing "standard" IC cards.

Fig. 10 is a block diagram of the electronic circuitry of the IC card of Fig. 8. Data is transmitted in eight bit parallel format over eight lines between the electronic device connector 90 and the card connector 88 to an input/output circuit 190 which changes its parallel input at 192 to a serial output at 194. Signals representing data on line 194 are delivered to a digital control 200 which formats the signals, as by generating appropriate signals at the start and stop of a data transmission, as well as to convert the digital data on line 194 to serial analog data on an output line 202. The signals on line 202 are delivered to an analog driver 204 which amplifies the signals and uses them to drive an infrared input/output 206 that includes the transmitter 120 and detector 122. The energy delivered over line 210 generates modulated infrared light which is transmitted as indicated by arrow 212. Light received as indicated by arrow 214 is detected by the detector 122 of circuit 206 which delivers its output on line 214 to an amplifier 215 which amplifies the signal and delivers it over line 216 to the controller 200. The controller 200 generates data representing the modulation of the detected infrared beam and delivers it over line 196 to the input output circuit 190. The circuit 190 delivers the data in parallel form to the electronic device.

Fig. 11 illustrates details of the analog driver 204. Signals delivered over line 202 pass through a filter portion 220 to an amplifying transistor 230. Direct current power from a line 232 passes through the four parallel-connected emitter elements 141-144 to energize these elements and cause them to emit infrared light in synchronism (the modulation is in synchronism). The infrared detector 122 has its output delivered to an amplifier 240 which delivers its output through a line 216. The circuitry of Figs. 10 and 11 are known in the prior art, and are presented only to provide an example of circuitry useful to energize the emitters and detectors of the IC card.

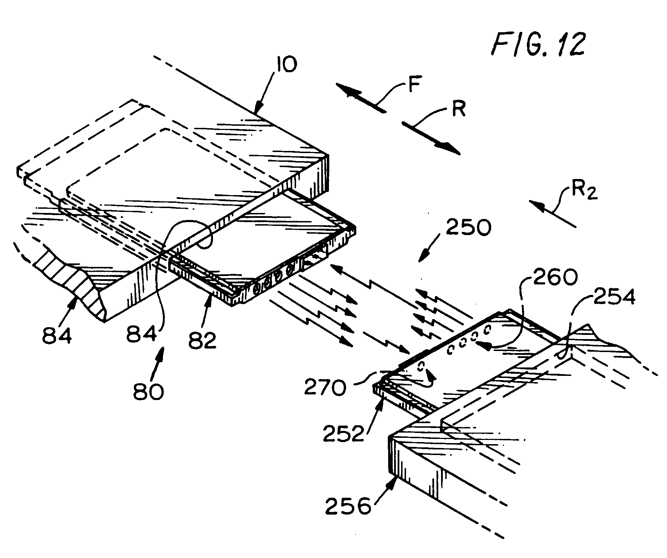

Fig. 12 illustrates a setup 250 where the IC card 82 that lies in a slot of an electronic device 10, is communicating with another substantially identical IC card, or IC card element 252 that lies in a slot 254 of another electronic device , or instrument 256. The instrument 256 is shown as another compact portable one such as a notebook computer. The IC card element 252 has an infrared emitter 260 comprising four emitter elements and an infrared detector 270 which faces in a rearward direction R2 with respect to the instrument 252. The use of two IC cards or card elements to establish data communication between two electronic devices or instruments that each have a card receiving slot 84, 254, makes communication especially convenient and at low cost.

Thus, an IC card is provided with a front portion for insertion into a slot of an electronic device, and a rear portion that substantially projects from the electronic device and that carries a light emitter and light detector. The IC card has a rigid frame, and the emitter and detector are fixed in position and orientation on the frame. It may be noted that while Fig. 8 indicates a frame 112 which is of molded plastic material, it is possible to construct the card with a rigid frame formed by metal, which may be in the form of metal halves that form metal top and bottom covers and metal sides and that are fixed to the card connector and or end(s) of the circuit board or mounts thereon. In any case, the frame forms a rigid structure that positions the front card connector 88 and the emitters and detectors. Although it may be possible to adjust the orientation of the emitter and detector, once adjusted they are held in a fixed position and orientation with respect to the electronic device that forms the card-receiving slot, by the rigid frame. This allows a person to begin infrared communication by inserting applicant's IC card with emitter and detector capability, into a card-receiving slot. Thereafter, the electronic device, through the rigid frame of the card, supports the emitter and detector and fixes their position and orientation. Although it is possible to mount batteries in the IC card, as where the card has an enlarged rear end as shown at 42 in Fig. 3, electrical energy is generally provided by the electronic device through the connector interface formed by the device connector and the card connector at the front end of the card.

Applicant obtains increased infrared light transmission by the use of a plurality of laterally-spaced emitting elements lying near the rear edge of the card. This allows applicant to use small off-the-shelf emitter elements that are of small enough size to fit into the card rear end where it is about the same thickness as the front portion, and still obtain a large light output. Although it is possible to transmit light in the visible spectrum, this is generally undesirable, partially because of interference from visible light in the environment. Applicant prefers to transmit and receive infrared light, of a wave length of about 950 nanometers. The emitters lie at the rear edge portion of the card and transmit light primarily in a rearward direction. The light detector similarly detects light passing primarily in a forward direction towards the rear edge portion of the card. A plurality of laterally-spaced detector elements can be placed near the rear edge.

## Claims

1. An IC card (82) which has a front portion (86) with a card connector (88) for insertion into a slot of an electronic device and a rear portion (92), , said rear portion includes a light emitter (120) and a light detector (122) characterized in that :
said IC card has a rigid frame (112) extending between said front and rear portions of said card;
said light emitter (120) and a light detector (122) are each maintained in position and orientation by said rigid frame;
said light emitter (120) includes a plurality of separate emitter elements (141, 142, 143, 144) spaced along the width of said rear portion (92) of said card, and electrically connected to be energized in synchronism.

2. The IC card (82) described in claim 1 wherein: said IC card includes an opaque rear barrier (150) which has a plurality of substantially identical openings (152) with each opening lying rearward of and in line with one of said emitter elements (141, 142, 143, 144).

3. The IC card (82) described in claim 1 or 2 wherein:
said IC card includes a circuitry (204) connected to said emitter elements (141, 142, 143, 144) to energize them in synchronism.

4. The IC card (82) as claimed in at least one of claims 1 to 3 wherein: said light emitter (120) is constructed to emit light largely along an axis (170) and within a spread angle (A) between 20° to 80° that is centered on said axis.

5. The IC card (82) as claimed in at least one of claims 1 to 4 wherein:
said light detector (122) is sensitive to at least some wavelengths of infrared light and visible light, and said rear portion includes an infrared window (154) that passes infrared light but which blocks most visible light.

6. The IC card (82) as claimed in at least one of claims 1 to 5 wherein:
said IC card has a card width (W) of about 54mm, a card length (L) of about 86mm, and a card thickness (T) of a magnitude of 5mm along both its front portion and its rear portion.

7. The IC card (82) as claimed in at least one of claims 1 to 5 wherein:
said IC card having a thickness (T) at said rear portion (42) of said card which is less than half of the card width (W) and less than half of the card length (L).

8. The combination of an IC-Card (82) as described in at least one of claims 1 to 7 with an electronic device (10, 256), wherein:
said slot (84) of the electronic device has a depth that said rear portion (92) of the card substantially projects from the electronic device.

9. A method for transmitting data between first and second electronic devices (84, 256), where each of said electronic devices has a slot (84, 254) with a front end for receiving an IC card, and has a device connector (90) at the front end of its slot, characterized by:
constructing first and second IC cards (82, 252) that are each insertable into one of said slots, so each has a front card portion with a card connector (88), and that each has a rear portion (92) with a light emitter (120, 260) and a light detector (122, 270);
inserting the front card portion of said first and second cards, respectively into the slots of said first and second electronic devices until each card connector and a corresponding device connector are mated, with said rear card portion of each card substantially projecting rearwardly (R, R₂) out of the corresponding slot;
orienting said electronic devices so the rear portions of said cards generally face each other;
energizing the emitter of said first card so it emits light modulated by data signals, and detecting said light by the detector of the second of said cards.

10. The method described in claim 9 wherein:
said step of constructing said first IC card includes forming it with a laterally-extending rear card edge (89) and placing a plurality of infrared emitter elements (141, 142, 143, 144) in said card so said elements are laterally spaced apart from one another along said rear card edge;
said step of transmitting data signals includes energizing all of said plurality of infrared emitter elements (141, 142, 143, 144) in synchronism.

## Patentansprüche

1. Eine IC-Karte (82), die einen vorderen Teilbereich (86) mit einem Kartensteckverbinder (88) zum Einführen in einen Steckplatz eines elektronischen Gerätes und einen hinteren Teilbereich (92) hat, wobei der hintere Teilbereich einen Lichtsender (120) und einen Lichtdetektor (122) enthält, dadurch gekennzeichnet,
daß die IC-Karte einen stabilen Rahmen (112) hat, der sich zwischen dem vorderen und hinteren Teilbereich der Karte erstreckt;
wobei der Lichtsender (120) und ein Lichtdetektor (122) durch den stabilen Rahmen in Position und Ausrichtung festgehalten werden;
wobei der Lichtsender (120) mehrere separate Sendeelemente (141, 142, 143, 144) hat, die im Abstand voneinander entlang der Breite des hinteren Teilbereichs (92) der Karte liegen und elektrisch für Synchronspeisung verbunden sind.

2. Die IC-Karte (82) wie in Anspruch 1 beschrieben, wobei
die IC-Karte eine undurchsichtige hintere Schranke (150) enthält, die mehrere, im wesentlichen identische Öffnungen (152) hat, wobei jede Öffnung hinter einem und in der Flucht mit einem der Sendeelemente (141, 142, 143, 144) liegt.

3. Die IC-Karte (82) wie in Anspruch 1 oder 2 beschrieben, wobei
die IC-Karte eine Schaltung (204) enthält, die mit den Sendeelementen (141, 142, 143, 144) verbunden ist, um sie synchron zu speisen.

4. Die IC-Karte (82) nach mindestens einem der Ansprüche 1 bis 3, wobei der Lichtsender (120) so konstruiert ist, daß er Licht hauptsächlich entlang einer Achse (170) und innerhalb eines Streuwinkels (A) zwischen 20° und 80° aussendet, der entlang dieser Achse zentriert ist.

5. Die IC-Karte (82) nach mindestens einem der Ansprüche 1 bis 4, wobei der Fotodetektor (122) auf mindestens einige Wellenlängen infraroten und sichtbaren Lichtes anspricht und der hintere Teilbereich ein Infrarotfenster (154) enthält, das Infrarotlicht durchläßt, jedoch das meiste sichtbare Licht blockiert.

6. Die IC-Karte (82) nach mindestens einem der Ansprüche 1 bis 5, wobei die IC-Karte eine Kartenbreite (W) von ca. 54 mm, eine Kartenlänge (L) von ca. 86 mm und eine Kartenstärke (T) in der Größenordnung von 5 mm entlang sowohl des vorderen als auch des hinteren Teilbereichs hat.

7. Die IC-Karte (82) nach mindestens einem der Ansprüche 1 bis 5, wobei die IC-Karte eine Stärke (T) am hinteren Teilbereich (42) der Karte hat, die kleiner als die Hälfte der Kartenbreite (W) und kleiner als die Hälfte der Kartenlänge (L) ist.

8. Die Kombination einer nach mindestens einem der Ansprüche 1 bis 7 beschriebenen IC-Karte (82) mit einem elektronischen Gerät (10, 256), wobei der Steckplatz (84) des elektronischen Gerätes eine solche Tiefe hat, daß der hintere Teilbereich (92) der Karte wesentlich aus dem elektronischen Gerät herausragt.

9. Eine Methode zur Datenübertragung zwischen einem ersten und einem zweiten elektronischen Gerät (84, 256), wobei jedes elektronische Gerät einen Steckplatz (84, 254) mit einem vorderen Ende zur Aufnahme einer IC-Karte sowie einen Gerätesteckverbinder (90) am vorderen Ende des Steckplatzes hat, gekennzeichnet durch
das Konstruieren einer ersten und einer zweiten IC-Karte (82, 252), die jeweils in einen der Steckplätze eingeführt werden kann, so daß jede einen vorderen Kartenbereich mit einem Kartensteckverbinder (88) hat, und die jeweils einen hinteren Teilbereich (92) mit einem Lichtsender (120, 260) und einem Lichtdetektor (122, 270) hat;
das Einführen des vorderen Kartenbereiches der erste und zweiten Karte jeweils in den Schlitz des ersten und zweiten elektronischen Gerätes, bis jeder Kartensteckverbinder sich mit einem entsprechenden Steckverbinder des Gerätes verbindet, wobei der hintere Teilbereich jeder Karte im wesentlichen nach hinten (R₁, R₂) aus dem entsprechenden Steckplatz ragt;
- das Ausrichten der elektronischen Geräte derart, daß die hinteren Teilbereiche der Karten sich grundsätzlich gegenüberstehen;
- das Speisen des Lichtsenders der ersten Karte, so daß er durch Datensignale moduliertes Licht aussendet, und das Erkennen dieses Lichtes durch den Detektor der zweiten Karte.

10. Die Methode nach Anspruch 9, wobei
der Schritt des Konstruierens der ersten IC-Karte es einschließt, daß auch eine sich seitlich erstreckende hintere Kartenkante (89) geformt wird und mehrere Infrarot-Lichtsendeelemente (141, 142, 143, 144) in der Karte eingebaut werden, so daß die Elemente entlang der hinteren Kartenkante seitlich voneinander getrennt liegen;
der Schritt des Übertragens von Datensignalen die synchrone Speisung aller Infrarot-Lichtsendeelemente (141, 142, 143, 144) einschließt.

## Revendications

1. Carte à circuit(s) intégré(s) (82) qui comporte une portion avant (86) avec un connecteur (88) de carte pour son insertion dans une fente d'un dispositif électronique et une portion arrière (92), ladite portion arrière comportant un émetteur de lumière (120) et un détecteur de lumière (122), caractérisée en ce que ladite carte comporte un châssis rigide (112) s'étendant entre lesdites portions avant et arrière de ladite carte; ledit émetteur de lumière (120) et un détecteur de lumière (122) étant chacun maintenu en position et en orientation par ledit châssis rigide; ledit émetteur de lumière (120) comportant plusieurs éléments émetteurs séparés (141, 142, 143, 144) espacés le long de la largeur de ladite portion arrière (92) de ladite carte et reliés électriquement pour être alimentés en synchronisme.

2. Carte (82) selon la revendication 1, caractérisée en ce que ladite carte comporte une barrière arrière opaque (150) qui comporte plusieurs ouvertures (152) sensiblement identiques, chaque ouverture s'étendant vers l'arrière et étant alignée avec l'un desdits éléments émetteurs (141, 142, 143, 144).

3. Carte (82) selon l'une des revendications 1 ou 2, caractérisée en ce que ladite carte comporte un circuit (204) relié auxdits éléments émetteurs (141, 142, 143, 144) pour les alimenter en synchronisme.

4. Carte (82) selon l'une quelconque des revendications 1 à 3, caractérisée en ce que ledit émetteur de lumière (120) est conçu pour émettre de la lumière principalement selon un axe (170) et à l'intérieur d'un angle de diffusion (A) compris entre 20° et 80° et qui est centré sur ledit axe.

5. Carte (82) selon l'une quelconque des revendications 1 à 4, caractérisée en ce que ledit détecteur de lumière (122) est sensible à la lumière infrarouge et à la lumière visible, et en ce que ladite portion arrière comporte une fenêtre infrarouge (154) qui laisse passer la lumière infrarouge mais qui bloque la plus grande partie de la lumière visible.

6. Carte (82) selon l'une quelconque des revendications 1 à 5, caractérisée en ce que ladite carte a une largeur de carte (W) d'environ 54 mm, une longueur de carte (L) d'environ 86 mm, et une épaisseur de carte (T) de 5 mm le long de sa portion avant et de sa portion arrière.

7. Carte (82) selon l'une quelconque des revendications 1 à 5, caractérisée en ce que l'épaisseur (T) de ladite carte à sa portion arrière (42) est inférieure à la moitié de la largeur de carte (W) et inférieure à la moitié de la longueur de carte (L).

8. Combinaison d'une carte (82) selon l'une quelconque des revendications 1 à 7 avec un dispositif électronique (10, 256), caractérisée en ce que ladite fente (84) du dispositif électronique a une profondeur telle que ladite portion arrière (92) de la carte se projette sensiblement hors du dispositif électronique.

9. Procédé pour échanger des données entre un premier et un second dispositif électronique (84, 256) dans lequel chacun desdits dispositifs électroniques comporte une fente (84, 254) avec une extrémité avant pour recevoir une carte à circuit(s) intégré(s), et comporte un connecteur (90) à l'extrémité avant de sa fente, caractérisé en ce que :
on fabrique une première et une seconde carte (82, 252) dont chacune peut être insérée dans l'une desdites fentes de manière que chacune comporte une portion avant de carte avec un connecteur de carte (88), et de manière que chacune comporte une portion arrière de carte (82) avec un émetteur de lumière (120, 260) et un détecteur de lumière (122, 270) ;
on insère la portion avant de carte desdites première et seconde cartes respectivement dans les fentes desdits premier et second dispositifs électroniques jusqu'à ce que chaque connecteur de carte et un connecteur correspondant de dispositif soient emboîtés, avec ladite portion arrière de carte de chaque carte se projetant sensiblement vers l'arrière (R1, R2) hors de la fente correspondante ;
on oriente lesdits dispositifs électroniques de façon que les portions arrière desdites cartes soient globalement en face l'une de l'autre ;
on alimente l'émetteur de ladite première carte de façon qu'il émette de la lumière modulée par des signaux de données, et on détecte ladite lumière par le détecteur de la seconde desdites cartes.

10. Procédé selon la revendication 9, caractérisé en ce que, lorsque l'on fabrique ladite première carte, on la réalise avec un bord arrière de carte s'étendant latéralement (89) et en plaçant plusieurs éléments émetteurs infrarouges (141, 142, 143, 144) dans ladite carte de façon que lesdits éléments soient espacés latéralement les uns des autres le long dudit bord arrière de carte ;
et en ce que, pour transmettre des signaux de données, on alimente tous lesdits plusieurs éléments émetteurs infrarouges (141, 142, 143, 144) en synchronisme.
